# EUROPÄISCHE PATENTANMELDUNG

(11) **EP 4 215 345 A1**
(43) Veröffentlichungstag der Anmeldung: **26.07.2023**
(21) Anmeldenummer: 22217116.7
(22) Anmeldetag: 29.12.2022
(51) Int. Cl.: B29C 65/14

(54) **VERFAHREN UND HOBELVORRICHTUNG ZUR BEARBEITUNG EINES ZUM STUMPFSCHWEISSEN VORGESEHENEN KUNSTSTOFFROHRS**

(30) Priorität: 10.01.2022 DE 102022100348
(71) Anmelder: Simona AG, 55606 Kirn (DE)
(72) Erfinder: Wobito, Holger, 45257 Essen (DE); Baumann, Edwin, 77955 Ettenheimweiler (DE); Stallmann, Marco, 55627 Merxheim (DE); Christ, Dieter, 55618 Simmertal (DE); Groß, Michael, 55765 Birkenfeld (DE)
(74) Vertreter: advotec.

(57) **Zusammenfassung**

Die Erfindung betrifft ein Verfahren zur Bearbeitung eines zum Stumpfschweißen vorgesehenen Kunststoffrohrs, wobei während der Bearbeitung an zumindest einem Rohrende (01) Kunststoffmaterial entfernt wird, um eine ebene Kontaktfläche (04) an der Stirnseite des Kunststoffrohrs herzustellen, und wobei die ebene Kontaktfläche (04) mit einer gegenüberliegenden ebenen Kontaktfläche (04) am Rohrende (01) eines zweiten Kunststoffrohrs stumpf verschweißt werden kann, wobei während der Bearbeitung des Rohrendes (01) ein Materialrücksprung (06) durch Entfernung von Kunststoffmaterial auf der Innenseite (05) und/oder Außenseite des Rohrendes (01) angebracht wird, wobei im Materialrücksprung (06) der beim Verschweißen zweier Rohrenden (01) entstehende innenseitige Schweißwulst (10) und/oder außenseitige Schweißwulst zumindest teilweise aufgenommen werden kann. Die Erfindung umfasst auch eine Vorrichtung zur Durchführung des Verfahrens.

## Beschreibung

Die Erfindung betrifft ein Verfahren zur Bearbeitung eines zum Stumpfschweißen vorgesehenen Kunststoffrohrs nach dem Oberbegriff des Anspruchs 1. Weiter betrifft die Vorrichtung eine Hobelvorrichtung, mit der das erfindungsgemäße Verfahren durchgeführt werden kann.

Beim Stumpfschweißen von Kunststoffrohren, die beispielsweise aus Polyethylen oder Polypropylen hergestellt sind, werden die Rohrenden mit geeigneten Heizvorrichtungen erhitzt und anschließend axial gegeneinander gefahren, so dass das Kunststoffmaterial im Bereich der Stirnseiten stoffschlüssig miteinander verschmilzt und eine dichte Verbindung zwischen den beiden Rohrenden erzeugt. Derartige Kunststoffrohrverbindungen können insbesondere zur Herstellung von Wasserleitungen, Abwasserleitungen oder Kabelschutzrohren eingesetzt werden. Um ein exaktes Schweißergebnis zu erzielen, ist es erforderlich, dass die Stirnseiten der Kunststoffrohre vor dem Verschweißen in einer Weise bearbeitet werden, dass sich eine ebene Kontaktfläche an der Stirnseite ergibt. Unebene Stirnseiten führen dagegen zu unregelmäßigen Schweißnähten und gegebenenfalls zu hohen Undichtigkeiten.

Die ebenen Kontaktflächen können im Rahmen der Herstellung der Kunststoffrohre im Herstellungswerk problemlos hergestellt werden. Schwieriger dagegen ist die Herstellung der ebenen Kontaktflächen im Bereich der jeweiligen Baustellen, da hier nur transportable und relativ einfache Maschinen eingesetzt werden können. Allerdings ist die Herstellung der ebenen Kontaktflächen an den Rohrenden der Kunststoffrohre baustellenseitig vielfach unvermeidlich, da die Kunststoffrohre beim Bau einer Rohrleitung vielfach gekürzt werden müssen.

Ein weiteres Problem beim Stumpfschweißen der Kunststoffrohre stellt die Bildung von Schweißwülsten insbesondere an der Rohrinnenseite dar. Diese Schweißwülste ergeben sich durch die Verdrängung des fließfähigen Kunststoffs während des Schweißvorgangs. An der Innenseite des Kunststoffrohrs ragt dieser Schweißwulst dann in das Rohr hinein und verengt den Rohrquerschnitt. Außerdem können sich Schmutz und Schwebstoffe in unerwünschter Weise an solchen innenseitigen Schweißwülsten ablagern und zu Störungen in der Rohrleitung führen. Auch die Schweißwülste an der Außenseite sind abhängig vom Einsatzzweck vielfach unerwünscht.

Aufgabe der vorliegenden Erfindung ist es, ein Verfahren zur Bearbeitung von zum Stumpfschweißen geeigneten Kunststoffrohren vorzuschlagen, das die negativen Einflüsse des beim Verschweißen der Kunststoffrohre gebildeten innenseitigen und/oder außenseitigen Schweißwulsts reduziert bzw. gänzlich vermeidet. Das Verfahren soll insbesondere zur Durchführung der baustellenseitigen Vorbereitung der Kunststoffrohre geeignet sein.

Vorteilhafte Ausführungsformen der Erfindung sind Gegenstand der Unteransprüche.

Das erfindungsgemäße Verfahren beruht auf dem Grundgedanken, dass während der Bearbeitung des Rohrendes, bei der die ebene Kontaktfläche an der Stirnseite des Kunststoffrohrs hergestellt wird, ein Materialrücksprung durch Entfernung von Kunststoffmaterial am Innenumfang und/oder Außenumfang des Rohrendes angebracht wird. Dieser Materialrücksprung ist so dimensioniert, dass der beim Verschweißen der Rohrenden entstehende innenseitige und/oder außenseitige Schweißwulst teilweise aufgenommen wird. Durch die zumindest phasenweise zeitgleich erfolgende Bearbeitung des Rohrendes zur Herstellung der ebenen Kontaktfläche und zur Herstellung des am Innenumfang und/oder Außenumfang des Rohrendes angebrachten Materialrücksprungs wird die erforderliche Bearbeitungszeit zur Bearbeitung des Rohrendes nicht wesentlich erhöht und zugleich durch den Materialrücksprung der unerwünschte Einfluss des innenseitigen und/oder außenseitigen Schweißwulstes reduziert bzw. gänzlich eliminiert. Außerdem kann durch das erfindungsgemäße Verfahren ein Bearbeitungswerkzeug zur Herstellung der ebenen Kontaktfläche an der Stirnseite des Kunststoffrohrs und zur zumindest teilweise zeitgleichen Herstellung des Materialrücksprungs eingesetzt werden.

Mit welcher Art von Bearbeitungsverfahren der Materialrücksprung bzw. die ebene Kontaktfläche während der Bearbeitung des Rohrendes hergestellt wird, ist grundsätzlich beliebig. Gemäß einer ersten Verfahrensvariante wird der Materialrücksprung bzw. die ebene Kontaktfläche durch Abtrag von Kunststoffmaterial mittels einer Fräseinheit hergestellt.

Alternativ dazu kann der Materialrücksprung und/oder die ebene Kontaktfläche durch Einsatz einer Hobelvorrichtung hergestellt werden.

Soweit eine Hobelvorrichtung zum Einsatz kommt, ist es besonders vorteilhaft, wenn die Hobelvorrichtung ein um eine Mittelachse rotierendes Hobelmesser umfasst. Das Hobelmesser wird so angeordnet, dass sich die Schneide des Hobelmessers radial zur Mittelachse erstreckt. Rotiert dann das Hobelmesser um die Mittelachse, so kann die ebene Kontaktfläche durch den rotierenden Eingriff der Schneide des Hobelmessers an der Stirnseite des Kunststoffrohrs in einfacher Weise abgehobelt werden. Um durch Einsatz der Hobelvorrichtung zugleich mit der ebenen Kontaktfläche auch den Materialrücksprung am Rohrende herstellen zu können, kann das Hobelmesser zusammen mit einem Stichelmesser an einer um eine Mittelachse rotierenden Planscheibe befestigt werden. Durch Vorschub der Planscheibe in Richtung der Längsachse des Kunststoffrohrs können dann das Hobelmesser und das Stichelmesser zumindest teilweise zeitgleich am Rohrende des Kunststoffrohrs in Eingriff gebracht werden, wobei durch das Hobelmesser die ebene Kontaktfläche und durch das Stichelmesser der Materialrücksprung hergestellt wird.

Um zuverlässig eine ebene Kontaktfläche und den gewünschten Materialrücksprung herstellen zu können, ist es besonders vorteilhaft, wenn die Planscheibe drehbar an einem Grundkörper gelagert ist. Am Grundkörper seinerseits sind zwei Führungselemente vorzusehen, mit denen der Grundkörper auf zwei parallel verlaufende Stützelemente, beispielsweise zwei Leitachsen, aufgelegt werden kann. Mit dieser einfachen Anordnung kann dann der Grundkörper in Richtung der Längsachse der Führungsbolzen verschoben werden, um den erforderlichen Vorschub des Hobelmessers und des Stichelmessers zur Herstellung der ebenen Kontaktfläche bzw. des gewünschten Materialrücksprungs zu realisieren.

Abhängig von der Dimensionierung des gewünschten Materialrücksprungs kann es erforderlich sein, dass das Stichelmesser zunächst nicht mit der vollen Wirkfläche am Kunststoffmaterial in Eingriff kommt. Um dies zu realisieren, ist es besonders vorteilhaft, wenn das Stichelmesser radial verstellbar an der Planscheibe gelagert ist, wobei das Stichelmesser während des Eingriffs am Rohrende des Kunststoffrohrs radial in Richtung des Außenumfangs des Kunststoffrohrs verstellt wird. Durch die zunehmende Verstellung des Kunststoffrohrs kann die Größe des Materialrücksprungs stufenweise oder kontinuierlich vergrößert werden.

Durch die Anbringung des Materialrücksprungs am zu verschweißenden Rohrende des Kunststoffrohrs wird die mit der Heizvorrichtung beim Stumpfschweißen zu erhitzende Materialmenge signifikant reduziert. Auf diese Weise wird es insbesondere auch ermöglicht, dass die Rohrenden beim Stumpfschweißen mit Infrarotstrahlung erwärmt werden, da Infrarotstrahlungsheizvorrichtungen ansonsten vielfach nicht die erforderliche Energiedichte aufbringen. Außerdem kann die erforderliche Schweißzeit reduziert werden.

Zur Durchführung des erfindungsgemäßen Verfahrens wird weiter eine Hobelvorrichtung vorgeschlagen. Die erfindungsgemäße Hobelvorrichtung umfasst neben einem Hobelmesser zur Herstellung der ebenen Kontaktfläche ein Stichelmesser zur Herstellung des Materialrücksprungs an der Innenseite und/oder Außenseite des Rohrendes.

Gemäß einer bevorzugten Ausführungsform ist es vorgesehen, dass das Hobelmesser und das Stichelmesser gemeinsam an einer um die Mittelachse der Hobelvorrichtung rotierenden Planscheibe befestigt sind.

Weiterhin ist es besonders vorteilhaft, wenn die Planscheibe ihrerseits drehbar an einem Grundkörper gelagert ist, wobei der Grundkörper zwei Führungselemente aufweist, mit denen der Grundkörper auf zwei parallel verlaufende Stützelemente aufgelegt werden kann. Die beiden parallel verlaufenden Stützelemente, die nicht Bestandteil der Hobelvorrichtung sind, bilden auf diese Weise eine axiale Führung für die Planscheibe, so dass durch axiale Verstellung der Planscheibe in Richtung der Längsachse des Kunststoffrohrs der notwendige Vorschub zur Herstellung der ebenen Kontaktfläche und des Materialrücksprungs realisiert wird.

Um mit der gleichen Hobelvorrichtung auch unterschiedlich dimensionierte Materialrücksprünge herstellen zu können, ist es besonders vorteilhaft, wenn das Stichelmesser auswechselbar an der Planscheibe befestigt ist. Auf diese Weise kann das Stichelmesser dann abhängig von der gewünschten Dimensionierung bzw. der gewünschten Gestaltung des Materialrücksprungs geeignet ausgewechselt werden.

Weiterhin ist es vorteilhaft, wenn das Stichelmesser radial verstellbar an der Planscheibe gelagert ist. Durch die radiale Verstellung des Stichelmessers relativ zur Planscheibe kann dann die erforderliche Zustellung bei Herstellung des Materialrücksprungs realisiert werden.

Um mit der erfindungsgemäßen Hobelvorrichtung gegebenenfalls auch ebene Kontaktflächen ohne zeitgleiche Herstellung des Materialrücksprungs herstellen zu können, ist es besonders vorteilhaft, wenn das Stichelmesser zwischen einer Funktionsstellung und einer Ruhestellung verstellbar gelagert ist. In der Funktionsstellung gelangt das Stichelmesser zur Herstellung des Materialrücksprungs am Ende des Kunststoffrohrs mit dem Kunststoffmaterial in Eingriff. In der Ruhestellung dagegen ist das Stichelmesser außer Eingriff, so dass durch den Eingriff des Hobelmessers die ebene Kontaktfläche hergestellt werden kann, ohne dass zugleich ein Materialrücksprung entsteht.

Soweit der Materialrücksprung im Hinblick auf seine geometrische Gestaltung eine Fase aufweisen soll, ist es besonders vorteilhaft, wenn das Stichelmesser einen angefasten Abschnitt aufweist.

Um die Rohrenden zweier miteinander zu verschweißender Kunststoffrohre baustellenseitig ohne Umstecken der Hobelvorrichtung einsetzen zu können, um an beiden Rohrenden jeweils eine ebene Kontaktfläche und einen Materialrücksprung herzustellen, ist es besonders vorteilhaft, wenn auf beiden Seiten der Planscheibe der Hobelvorrichtung jeweils ein Hobelmesser und ein Stichelmesser befestigt sind. Auf diese Weise kann dann die Hobelvorrichtung zunächst an dem einen Rohrende auf der einen Seite der Planscheibe in Eingriff gebracht werden, um an diesem Rohrende die ebene Kontaktfläche und den Materialrücksprung herzustellen. Anschließend wird dann die Hobelvorrichtung in der Gegenrichtung verstellt, und durch Eingriff der zweiten Seite der Planscheibe am gegenüberliegenden Rohrende werden dort ebenfalls die ebene Kontaktfläche und ein Materialrücksprung hergestellt.

Eine Ausführungsform der Erfindung ist in den Zeichnungen schematisiert dargestellt und wird nachfolgend beispielhaft erläutert. Es zeigen:
- Fig. 1: ein Rohrende eines zum Stumpfschweißen vorbereiteten Kunststoffrohrs im schematisierten Querschnitt;
- Fig. 2: zwei Rohrenden gemäß Fig. 1 nach dem Stumpfschweißen im schematisierten Teilquerschnitt;
- Fig. 3: die Schweißnaht der beiden Rohrenden in einem vergrößerten Ausschnitt;
- Fig. 4: eine Hobelvorrichtung zur Bearbeitung des Rohrendes gemäß Fig. 1 in perspektivischer Ansicht;
- Fig. 5: die Hobelvorrichtung gemäß Fig. 4 in seitlicher Ansicht;
- Fig. 6: die Hobelvorrichtung gemäß Fig. 4 in Ansicht von vorne.

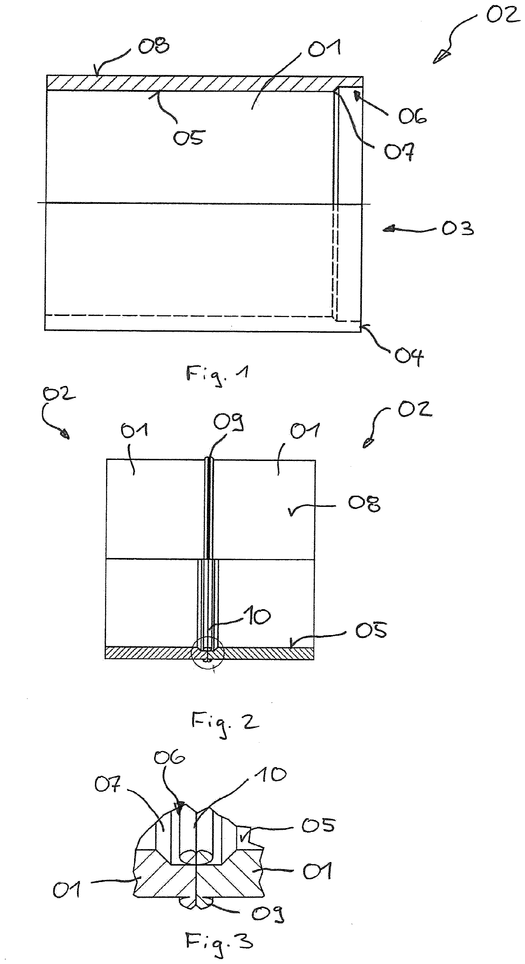

Fig. 1 zeigt ein Rohrende 01 eines Kunststoffrohrs 02 im schematisierten Querschnitt. Das Kunststoffrohr 02 ist zum Stumpfschweißen mit weiteren Kunststoffrohren 02 vorgesehen, um beispielsweise eine Rohrleitung herzustellen. An einer Stirnseite 03 des Kunststoffrohrs 02 ist eine ebene Kontaktfläche 04 vorgesehen, mit der ein Rohrende 01 beim Stumpfschweißen mit einem zweiten Rohrende 01 durch Aufschmelzen des Kunststoffmaterials stoffschlüssig verbunden wird. Auf einer Innenseite 05 des Rohrendes 01 ist außerdem ein Materialrücksprung 06 angebracht, so dass die Wanddicke des Kunststoffrohrs 02 im Bereich des Rohrendes 01, d. h. exakt im Bereich des Endquerschnitts, um die Breite des Materialrücksprungs 06 reduziert ist. Auf der zum Kunststoffrohr 02 weisenden Seite des Materialrücksprungs 06 ist außerdem eine Fase 07 angebracht. Im Bereich der Fase 07 geht die Wandstärke des Materialrücksprungs 06 kontinuierlich zur Wandstärke des sonstigen Kunststoffrohrs 02 über. Soweit für den jeweiligen Einsatzzweck erforderlich, kann auch an der Außenseite 08 ein Materialrücksprung angebracht werden.

Fig. 2 zeigt zwei durch Stumpfschweißen miteinander verbundene Rohrenden 01. Durch Stumpfschweißen der beiden Rohrenden 01 befinden sich sowohl auf einer Außenseite 08 als auch auf der Innenseite 05 der beiden Kunststoffrohre 02 Schweißwülste 09 und 10. Der äußere Schweißwulst 09 steht über die Wandung der Kunststoffrohre 02 an der Außenseite 08 über, was problemlos ist. Die Anordnung des inneren Schweißwulsts 10 wird nachfolgend anhand der Zeichnung in Fig. 3 näher erläutert.

Fig. 3 zeigt den inneren Schweißwulst 10 auf der Innenseite 05 der beiden Rohrenden 01. Man erkennt, dass der innere Schweißwulst 10 im Bereich der beiden Materialrücksprünge 06 aufgenommen ist, so dass der Leitungsquerschnitt der beiden miteinander verschweißten Kunststoffrohre 02 durch den inneren Schweißwulst 10 nicht verengt wird.

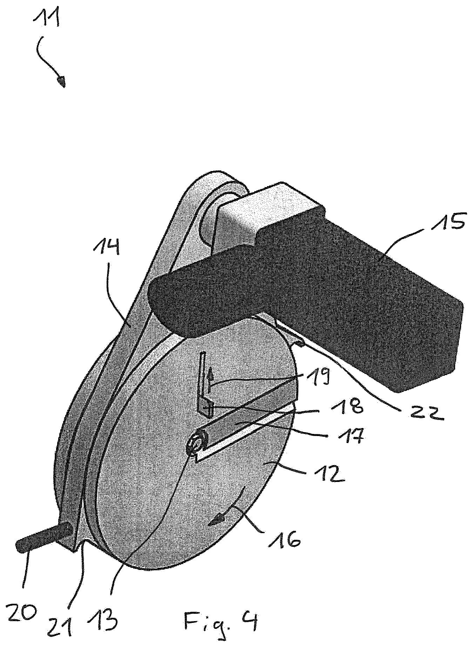

Fig. 4 zeigt eine Hobelvorrichtung 11, mit der in einfacher Weise sowohl die ebene Kontaktfläche 04 als auch der Materialrücksprung 06 an den Rohrenden 01 der Kunststoffrohre 02 angebracht werden kann. Die Hobelvorrichtung 11 umfasst eine Planscheibe 12, die um eine Mittelachse 13 rotierend an einem Grundkörper 14 gelagert ist. Zum rotatorischen Antrieb der Planscheibe 12 ist ein Antriebsmotor 15 vorgesehen, dessen Drehmoment über an dem Grundkörper 14 verlaufende Übertragungselemente auf die Planscheibe 12 übertragen wird. Durch Betrieb des Antriebsmotors 15 kann die Planscheibe 12 in Richtung des Bewegungspfeils 16 rotatorisch angetrieben werden.

Auf beiden Seiten der Planscheibe 12 befinden sich jeweils ein Hobelmesser 17 und ein Stichelmesser 18. Das Hobelmesser 17 ist auswechselbar an der Planscheibe 12 befestigt, wohingegen das Stichelmesser 18 in Richtung des Bewegungspfeils 19 radial an der Planscheibe 12 verstellt werden kann. Die Hobelvorrichtung 11 kann an einem Handgriff 20 angehoben werden, um den Grundkörper 14 mit zwei Führungselementen 21 und 22 auf zwei in Fig. 4 nicht dargestellte parallel verlaufende Stützelemente aufzulegen. Durch Verschieben der auf die Führungselemente 21 und 22 aufgelegten Hobelvorrichtung 11 können dann das Hobelmesser 17 und das Stichelmesser 18 und die funktionskomplementär auf der gegenüberliegenden Seite der Planscheibe 12 angebrachten Hobelmesser bzw. Stichelmesser an den Rohrenden 01 zweier einander gegenüberliegend angeordneter Kunststoffrohre 02 angebracht werden, um an beiden Rohrenden 01 nacheinander die ebene Kontaktfläche 04 und den Materialrücksprung 06 herzustellen.

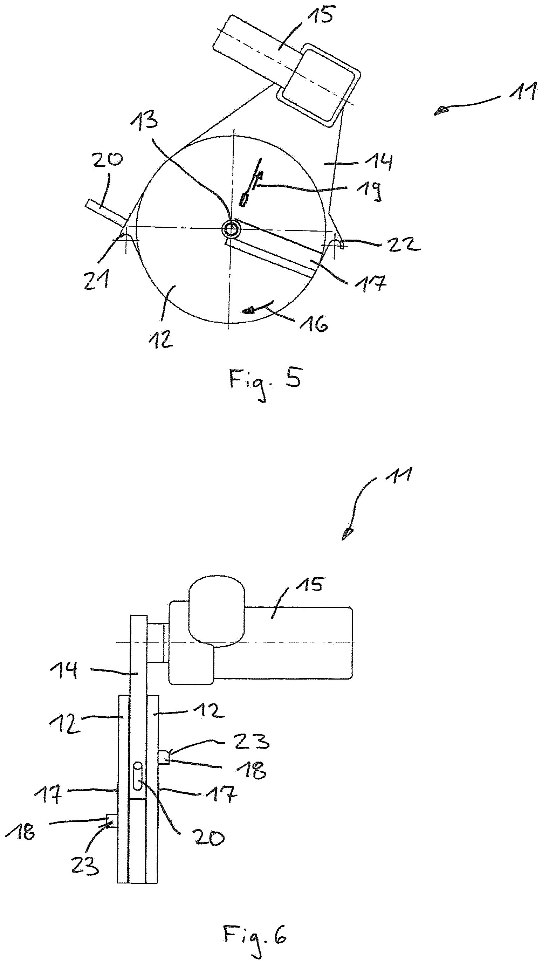

Fig. 5 zeigt die Hobelvorrichtung 11 in seitlicher Ansicht. Man erkennt die beiden Führungselemente 21 und 22, die auf zwei funktionskomplementär gestaltete Stützelemente, beispielsweise kreisrunde Stützachsen, aufgelegt werden können. Der Antriebsmotor 15 treibt die Planscheibe 12 um die Mittelachse 13 rotierend in Richtung des Bewegungspfeils 16 an. Um Materialrücksprünge mit unterschiedlicher Tiefe herstellen zu können, kann das Stichelmesser 18 in Richtung des Bewegungspfeils 19 radial relativ zur Planscheibe 12 verstellt werden.

Fig. 6 zeigt die Hobelvorrichtung 11 in Ansicht von hinten. Man erkennt, dass an der Planscheibe 12 auf beiden Seiten jeweils ein Hobelmesser 17 und ein radial verstellbar gelagertes Stichelmesser 18 angeordnet sind, um die Rohrenden 01 zweier einander gegenüberliegend angeordneter Kunststoffrohre 02 nacheinander bearbeiten zu können, ohne die Hobelvorrichtung 11 entnehmen und umdrehen zu müssen. Das Stichelmesser 18 weist einen angefasten Abschnitt 23 auf, mit dem die Fase 07 am Ende des Materialrücksprungs 06 hergestellt werden kann.

## Patentansprüche

1. Verfahren zur Bearbeitung eines zum Stumpfschweißen vorgesehenen Kunststoffrohrs (02), wobei während der Bearbeitung an zumindest einem Rohrende (01) Kunststoffmaterial entfernt wird, um eine ebene Kontaktfläche (04) an der Stirnseite (03) des Kunststoffrohrs (02) herzustellen, und wobei die ebene Kontaktfläche (04) mit einer gegenüberliegenden ebenen Kontaktfläche (04) am Rohrende (01) eines zweiten Kunststoffrohrs (01) stumpf verschweißt werden kann, **dadurch gekennzeichnet,**
**dass** während der Bearbeitung des Rohrendes (01) ein Materialrücksprung (06) durch Entfernung von Kunststoffmaterial auf der Innenseite (05) und/oder Außenseite (08) des Rohrendes (01) angebracht wird, wobei im Materialrücksprung (06) der beim Verschweißen zweier Rohrenden (01) entstehende innenseitige Schweißwulst (10) und/oder außenseitige Schweißwulst (09) zumindest teilweise aufgenommen werden kann.

2. Verfahren nach Anspruch 1,
**dadurch gekennzeichnet,**
**dass** das Kunststoffmaterial zur Herstellung der ebenen Kontaktfläche (04) an der Stirnseite (03) des Kunststoffrohrs (02) mit einer Fräseinheit entfernt wird.

3. Verfahren nach Anspruch 1,
**dadurch gekennzeichnet,**
**dass** das Kunststoffmaterial zur Herstellung des Materialrücksprungs (06) und/oder zur Herstellung der ebenen Kontaktfläche (04) an der Stirnseite (03) des Kunststoffrohrs (02) mit einer Hobelvorrichtung (11) entfernt wird.

4. Verfahren nach Anspruch 3,
**dadurch gekennzeichnet,**
**dass** die Hobelvorrichtung (11) ein um eine Mittelachse (13) rotierendes Hobelmesser (17) umfasst, wobei die ebene Kontaktfläche (04) durch Eingriff des Hobelmessers (17) an der Stirnseite (04) des Kunststoffrohrs (02) abgehobelt wird.

5. Verfahren nach Anspruch 4,
**dadurch gekennzeichnet,**
**dass** das Hobelmesser (17) zusammen mit einem Stichelmesser (18) an einer um die Mittelachse (13) rotierenden Planscheibe (12) befestigt ist, wobei durch Vorschub der Planscheibe (12) in Richtung der Längsachse des Kunststoffrohrs (02) das Hobelmesser (17) und das Stichelmesser (18) zumindest teilweise zeitgleich am Rohrende (01) des Kunststoffrohrs (02) in Eingriff kommen.

6. Verfahren nach Anspruch 5,
**dadurch gekennzeichnet,**
**dass** die Planscheibe (12) drehbar an einem Grundkörper (14) gelagert ist, wobei am Grundkörper (14) zwei Führungselemente (21, 22) vorgesehen sind, mit denen der Grundkörper (14) auf zwei parallel verlaufende Stützelemente aufgelegt wird, und wobei der Grundkörper (14) in Richtung der Längsachse der Führungsbolzen verschoben wird, um den Vorschub der Planscheibe (12) in Richtung der Längsachse des Kunststoffrohrs (02) zu realisieren.

7. Verfahren nach Anspruch 5 oder 6,
**dadurch gekennzeichnet,**
**dass** das Stichelmesser (18) radial verstellbar an der Planscheibe (12) gelagert ist, wobei das Stichelmesser (18) während des Eingriffs am Rohrende (01) des Kunststoffrohrs (02) radial in Richtung des Außenumfangs des Kunststoffrohrs (02) verstellt wird.

8. Verfahren nach einem der Ansprüche 1 bis 7,
**dadurch gekennzeichnet,**
**dass** die Rohrenden (01) der mit dem Materialrücksprung (06) versehenen Kunststoffrohre (02) beim Stumpfschweißen mit Infrarotstrahlung erwärmt werden.

9. Hobelvorrichtung zur Durchführung eines Verfahrens nach einem der Ansprüche 1 bis 8,
**dadurch gekennzeichnet,**
**dass** die Hobelvorrichtung (11) ein Hobelmesser (17) zur Herstellung einer ebenen Kontaktfläche (04) am Rohrende (01) und ein Stichelmesser (18) zur Herstellung eines Materialrücksprungs (06) auf der Innenseite (05) des Rohrendes (01) umfasst.

10. Hobelvorrichtung nach Anspruch 9,
**dadurch gekennzeichnet,**
**dass** das Hobelmesser (17) und das Stichelmesser (18) an einer um die Mittelachse (13) rotierenden Planscheibe (12) befestigt sind.

11. Hobelvorrichtung nach Anspruch 10,
**dadurch gekennzeichnet,**
**dass** die Planscheibe (12) drehbar an einem Grundkörper (14) gelagert ist, wobei am Grundkörper (14) zwei Führungselemente (21, 22) vorgesehen sind, mit denen der Grundkörper (14) auf zwei parallel verlaufende Stützelemente aufgelegt werden kann, und wobei die parallel verlaufenden Stützelemente eine Führung der Planscheibe (12) in Richtung der Längsachse des Kunststoffrohrs (02) realisieren.

12. Hobelvorrichtung nach einem der Ansprüche 9 bis 11,
**dadurch gekennzeichnet,**
**dass** das Stichelmesser (18) auswechselbar an der Planscheibe (12) befestigt ist und/oder radial verstellbar an der Planscheibe (12) gelagert ist.

13. Hobelvorrichtung nach einem der Ansprüche 9 bis 12,
**dadurch gekennzeichnet,**
**dass** das Stichelmesser (18) zwischen einer Funktionsstellung und einer Ruhestellung verstellbar gelagert ist, wobei das Stichelmesser (18) in der Funktionsstellung zur Herstellung des Materialrücksprungs (06) am Rohrende (01) des Kunststoffrohrs (02) in Eingriff bringbar ist, und wobei das Stichelmesser (18) in der Ruhestellung außer Eingriff des Kunststoffrohrs (18) ist.

14. Hobelvorrichtung nach einem der Ansprüche 9 bis 13,
**dadurch gekennzeichnet,**
**dass** das Stichelmesser (18) einen angefasten Abschnitt (23) aufweist, mit dem eine Fase (07) am Materialrücksprung (06) herstellbar ist.

15. Hobelvorrichtung nach einem der Ansprüche 9 bis 14,
**dadurch gekennzeichnet,**
**dass** auf beiden Seiten der Planscheibe (12) jeweils ein Hobelmesser (17) und ein Stichelmesser (18) befestigt ist.
